# EUROPÄISCHE PATENTANMELDUNG

(11) **EP 1 291 673 A2**
(43) Veröffentlichungstag der Anmeldung: **12.03.2003**
(21) Anmeldenummer: 02016565.0
(22) Anmeldetag: 24.07.2002
(51) Int. Cl.: G01S 17/10, G01S 7/497

(54) **Optoelektronische Entfernungsmesseinrichtung**

(30) Priorität: 03.09.2001 DE 10143107
(71) Anmelder: Sick AG, 79183 Waldkirch, Breisgau (DE)
(72) Erfinder: Hipp, Johann, 22931 Hamburg (DE); Gorris, Fried, 22946 Trittau (DE)
(74) Vertreter: Manitz, Finsterwald & Partner GbR

(57) **Zusammenfassung**

Die Erfindung betrifft eine optoelektronische Entfernungsmeßeinrichtung mit wenigstens einer Sendeeinheit zur Aussendung gepulster elektromagnetischer Strahlung, zumindest einer der Sendeeinheit zugeordneten Empfangseinheit zum Empfang der reflektierten Strahlung und einer Auswerteeinrichtung zur Bestimmung der Entfernung von die ausgesandte Strahlung reflektierenden Objekten nach einem Pulslaufzeitmeßverfahren, wobei die Auswerteeinrichtung derart ausgebildet ist, daß für jeden Sendepuls die Breite eines oder mehrerer Empfangspulse und insbesondere auch die Breite des Sendepulses selbst meßbar ist, und wobei eine Speichereinrichtung vorgesehen ist, in der zumindest eine empirisch gewonnene Korrekturtabelle oder -kurve enthalten ist, die aus für wenigstens eine konstante Kalibrierentfernung jeweils mit verschiedenen Kalibrieramplituden durchgeführten Kalibriermessungen erhalten wurde und der für jede gemessene Pulsbreite ein entsprechender Entfernungskorrekturwert entnehmbar ist.

## Beschreibung

Die Erfindung betrifft eine optoelektronische Entfernungsmeßeinrichtung, insbesondere einen Laserscanner, mit wenigstens einer Sendeeinheit zur Aussendung gepulster elektromagnetischer Strahlung, zumindest einer der Sendeeinheit zugeordneten Empfangseinheit zum Empfang der reflektierten Strahlung und einer Auswerteeinrichtung zur Bestimmung der Entfernung von die ausgesandte Strahlung reflektierenden Objekten nach einem Pulslaufzeitmeßverfahren.

Die Erfindung betrifft ferner eine Verfahren zur Entfernungsmessung mit einer derartigen Entfernungsmeßeinrichtung.

Derartige Einrichtungen und Verfahren sind grundsätzlich bekannt und werden beispielsweise in Verbindung mit Fahrzeugen eingesetzt, um während der Fahrt die Umgebung des Fahrzeugs zu erfassen.

Problematisch ist das Auftreten von Objekten mit stark unterschiedlichen Reflektivitäten, die entsprechend stark variierende Amplituden der Empfangspulse auf der Empfangseinheit zur Folge haben. Ein nahes Objekt hoher Reflektivität wie z.B. ein sogenanntes "Katzenauge" oder ein Fahrbahnbegrenzungspfosten, der auch als kooperatives Ziel bezeichnet wird, einerseits und ein fernes Objekt geringer Reflektivität wie z.B. ein Baum oder eine Person mit dunkler Kleidung andererseits können sich in der Praxis hinsichtlich der Intensität und damit der Empfangssignalamplitude der von ihnen reflektierten Strahlung um einen Faktor 10⁶ voneinander unterscheiden.

Eine Empfangseinheit, die diesen Dynamikbereich abdecken soll, wird bei hohen Intensitäten zwangsläufig übersteuern. Die für die Pulslaufzeitmessung und damit für die Entfernungsmessung maßgebliche Breite der Empfangspulse ist von der Amplitude der empfangenen Strahlungspulse abhängig. Dieser Zusammenhang kann im nicht übersteuerten oder analogen Bereich, d.h. für eine bestimmte Intensität oder Amplitude nicht überschreitende Strahlungspulse, vergleichsweise unkritisch sein, bei hohen Intensitäten jedoch zu Ungenauigkeiten bei der Entfernungsbestimmung führen, die im Bereich von einigen Metern liegen können.

Im Zusammenhang mit dieser Problematik ist es z.B. bekannt, eine CFD-Methode (CFD = Constant Fraction Discrimination), eine Komparatorkette, logarithmische Verstärker oder mechanische, motorisch angetriebene Dämpfungsfilter einzusetzen. Derartige Ansätze ermöglichen eine Kompensation lediglich in einem zu kleinen Bereich, sind zu langsam oder weisen keine ausreichende Genauigkeit auf. Die CFD-Methode erweist sich im übrigen bei kurzen Signalen als schwierig.

Aufgabe der Erfindung ist es, ausgehend von einer optoelektronischen Entfernungsmeßeinrichtung bzw. einem Entfernungsmeßverfahren der eingangs genannten Art eine Möglichkeit zu schaffen, bei der Entfernungsbestimmung zumindest solche Fehler, die aufgrund unterschiedlicher Intensitäten der reflektierten Strahlung auftreten, auf ein Minimum zu reduzieren, wobei dies insbesondere über den gesamten in der Praxis auftretenden Dynamikbereich möglich sein soll.

Die Lösung dieser Aufgabe erfolgt zum einen durch die Merkmale des unabhängigen Vorrichtungsanspruchs und insbesondere dadurch, daß die Auswerteeinrichtung derart ausgebildet ist, daß für jeden Sendepuls die Breite eines oder mehrerer Empfangspulse und insbesondere auch die Breite des Sendepulses selbst meßbar ist, und daß eine Speichereinrichtung vorgesehen ist, in der zumindest eine empirisch gewonnene Korrekturtabelle oder -kurve enthalten ist, die aus für wenigstens eine konstante Kalibrierentfernung jeweils mit verschiedenen Kalibrieramplituden durchgeführten Kalibriermessungen erhalten wurde und der für jede gemessene Pulsbreite ein entsprechender Entfernungskorrekturwert entnehmbar ist.

Erfindungsgemäß wird zunächst die Breite der Empfangspulse gemessen und anschließend mittels der gemessenen Pulsbreite ein Korrekturwert ermittelt, mit dem sich insbesondere im Fall einer Übersteuerung die gemessene Pulsbreite gewissermaßen auf die "wahre" Breite oder eine Bezugs- oder Eichbreite, d.h. auf die Breite einer bestimmten Amplitude, zurückführen läßt, die der Empfangspuls aufweisen würde, wenn es nicht zu Abweichungen insbesondere aufgrund einer Übersteuerung gekommen wäre, sondern Messungen bei konstanter Echoamplitude durchgeführt würden. Der Korrekturwert kompensiert somit die zu falschen Entfernungswerten führenden Effekte einer Übersteuerung bzw. der unterschiedlichen analogen Amplituden. Erfindungsgemäß wird grundsätzlich mit Ausnahme von die Bezugsamplitude bzw. Bezugsbreite aufweisenden Empfangspulsen jeder Empfangspuls mittels der Korrekturtabelle oder -kurve korrigiert, wobei für Empfangspulse im Übersteuerungsbereich die Korrektur größer ist als für Empfangspulse im analogen Bereich.

Die Erfindung nutzt die Erkenntnis, daß im Fall einer Abweichung von der Bezugsamplitude, insbesondere einer Übersteuerung, der betreffende Empfangspuls "in die Breite geht", wodurch eine zu große Breite gemessen wird, daß jedoch die Abweichung von der Bezugsbreite ein Maß für den bei der Entfernungsbestimmung durch das verwendete Pulslaufzeitmeßverfahren resultierenden Fehler darstellt. Erfindungsgemäß wurde folglich erkannt, daß die Amplitudeninformation gewissermaßen im verbreiterten oder im "breitgedrückten" Empfangspuls nach wie vor vorhanden, nämlich in der Breite des verbreiterten oder übersteuerten Empfangspulses zu finden ist. Der Zusammenhang zwischen der gemessenen Breite und dem daraus resultierenden Entfernungsmeßfehler wird erfindungsgemäß empirisch bestimmt.

Die Erfindung erweitert folglich den analogen Bereich der Empfangseinheit bis in den Übersteuerungsbereich hinein. Es wurde festgestellt, daß mit der Erfindung praktisch der gesamte in der Praxis auftretende Dynamikbereich zwischen nahen Objekten hoher Reflektivität und fernen Objekten geringer Reflektivität abgedeckt werden kann und sich hierbei die Ungenauigkeiten bei der Entfernungsmessung auf weniger als 1cm pro Einzelmessung reduzieren lassen.

Bevorzugt umfaßt die Auswerteeinrichtung wenigstens einen Komparator zur Digitalisierung der analogen und insbesondere verstärkten Empfangspulse.

Ferner ist bevorzugt vorgesehen, daß die Auswerteeinrichtung zur Bestimmung der Pulsbreite der digitalisierten Empfangspulse einen Time-to-Analog-Wandler (TAC) umfaßt.

Des weiteren wird vorgeschlagen, daß die Auswerteeinrichtung in der Lage ist, eine zur Pulsbreite der digitalisierten Empfangspulse proportionale Spannung zu erzeugen.

Vorzugsweise umfaßt die Auswerteinrichtung einen Analog/Digital-Wandler, mit dem aus einem der Pulsbreite der digitalisierten Empfangspulse entsprechenden analogen Signal ein mit einem nachgeordneten Mikroprozessor verarbeitbares digitales Signal erzeugbar ist. Mittels des Mikroprozessors können unter Rückgriff auf die in der Korrekturtabelle oder -kurve gespeicherten Werte die korrigierten Entfernungswerte berechnet werden.

Erfindungsgemäß kann entsprechend der vorstehend anhand der Empfangspulse erläuterten Vorgehensweise auch die Breite des Sendepulses gemessen und zur Verbesserung der Genauigkeit der Entfernungsmessung verwendet werden. Bevorzugt wird die gemessene Breite des Sendepulses als Regelgröße eingesetzt.

Die Lösung der vorstehend genannten Aufgabe erfolgt zum anderen durch die Merkmale des unabhängigen Verfahrensanspruchs und insbesondere dadurch, daß für jeden Sendepuls die Breite eines oder mehrerer Empfangspulse und insbesondere auch die Breite des Sendepulses selbst gemessen wird, einer gespeicherten Korrekturtabelle oder -kurve ein der gemessenen Pulsbreite entsprechender Entfernungskorrekturwert entnommen wird, und ein auf der Grundlage des Empfangspulses gemessener Roh-Entfernungswert mittels des Entfernungskorrekturwertes korrigiert wird.

Vorzugsweise ist vorgesehen, daß die Korrekturtabelle oder - kurve zuvor aus Kalibriermessungen erzeugt wird, die für wenigstens eine konstante Kalibrierentfernung jeweils mit verschiedenen Kalibrieramplituden durchgeführt werden.

Dabei ist es bevorzugt, wenn die Kalibrieramplituden mittels verschiedener Kalibrierreflektoren hervorgerufen werden.

Es ist auch möglich, unterschiedliche Signalhöhen dadurch zu erreichen, daß unter Verwendung eines einzigen Kalibrierobjekts und damit bei konstanter Kalibrierreflektivität verschiedene Abschattungen der Empfangseinheit und insbesondere einer Empfangslinse der Empfangseinheit vorgenommen werden.

Ferner wird erfindungsgemäß vorgeschlagen, daß die Korrekturtabelle oder -kurve automatisch aufgenommen wird. Dies kann insbesondere bei der Inbetriebnahme der Entfernungsmeßeinrichtung erfolgen.

Ein wesentlicher Vorteil der Erfindung besteht darin, daß jeder Empfangspuls für sich.korrigiert wird und keine statistischen Methoden eingesetzt zu werden brauchen, um die Genauigkeit der Entfernungsmessung zu verbessern.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: analoge Empfangspulse sowie daraus gebildete digitalisierte Empfangspulse einer optoelektronischen Entfernungsmeßeinrichtung gemäß einer Ausführungsform der Erfindung,
- Fig. 2: eine Korrekturkurve einer optoelektronischen Entfernungsmeßeinrichtung gemäß einer Ausführungsform der Erfindung,
- Fig. 3: das Schaltbild für eine Empfangseinheit und eine Auswerteeinrichtung einer optoelektronischen Entfernungsmeßeinrichtung gemäß einer Ausführungsform der Erfindung.

Bei der erfindungsgemäßen optoelektronischen Entfernungsmeßeinrichtung handelt es sich bevorzugt um einen Laserscanner, der in einer oder mehreren Abtastebenen gepulste elektromagnetische Strahlung in einen Überwachungsbereich aussendet und von im Überwachungsbereich befindlichen Objekten reflektierte Strahlung empfängt. Die Sendeeinheit umfaßt als Strahlungsquelle eine Laserdiode und eine Strahlungsumlenkeinrichtung in Form eines rotierenden Spiegels. Der Sichtbereich eines derartigen Scanners beträgt bis zu 360°. Für jede Abtastebene ist als Empfänger eine Photodiode, insbesondere eine APD (Avalanche Photo Diode) vorgesehen. Innerhalb jeder Abtastebene mißt der Scanner für jede Richtung, in die ein Sendepuls ausgesandt wird, neben der Entfernung zu einem oder mehreren Objekten (worauf im folgenden näher eingegangen wird) auch den Winkel bezogen auf eine vorgegebene Achse.

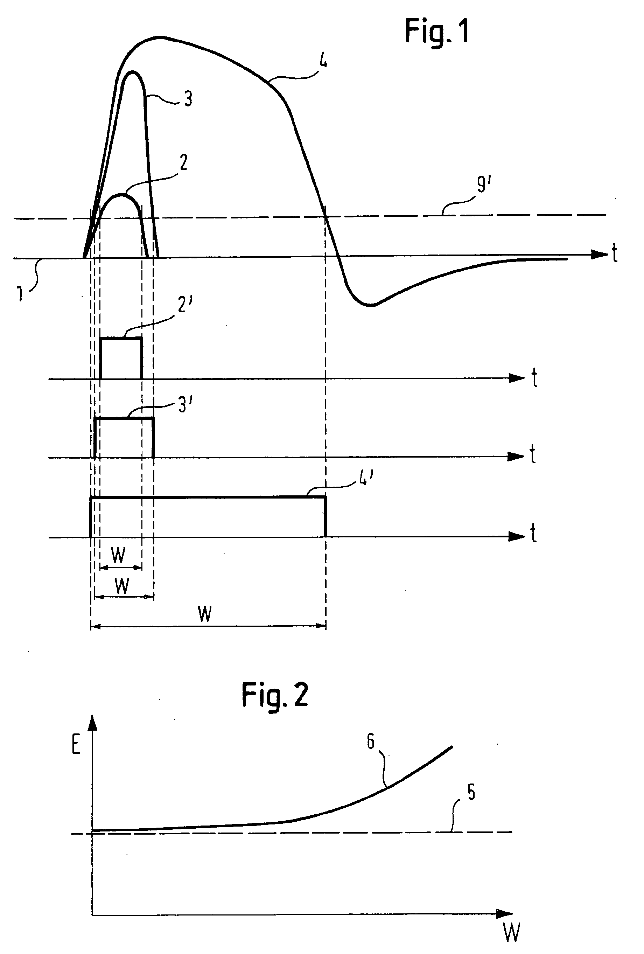

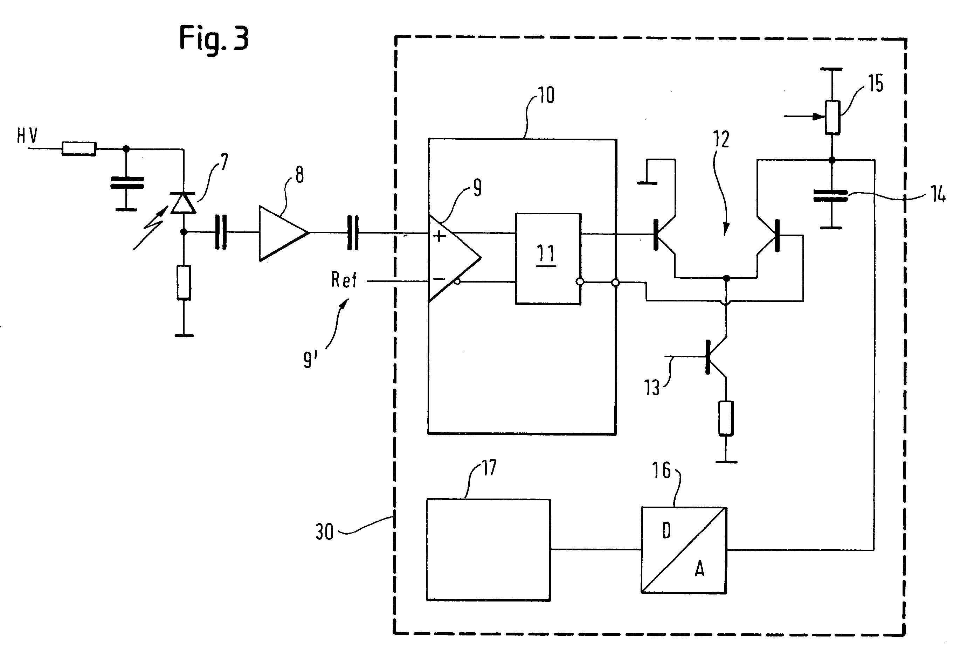

Fig. 1 zeigt am Beispiel einer Abtastebene des Scanners zunächst das von der mit einem Lastwiderstand in Reihe geschalteten Photodiode 7 (vgl. Fig. 3) sowie einem nachgeschalteten Verstärker 8 gelieferte analoge Empfangssignal 1. Dargestellt sind drei verschiedene Empfangspulse, und zwar ein Empfangspuls 2 geringer Intensität bzw. Amplitude, ein Empfangspuls 3 nahe der Übersteuerungsgrenze sowie ein übersteuerter Empfangspuls 4.

Mittels eines eine vorgegebene Referenzspannung 9' aufweisenden Komparators 9 (vgl. Fig. 3) werden die analogen Empfangspulse 2, 3, 4 digitalisiert. Fig. 1 zeigt, daß sich die digitalisierten Empfangspulse 2', 3', 4' zum einen hinsichtlich ihrer Breite W und zum anderen hinsichtlich ihres Startzeitpunkts voneinander unterscheiden.

Der vergrößerte Empfangspuls 3 ist gegenüber dem Empfangspuls 2 verbreitert. Der übersteuerte Empfangspuls 4 ist "in die Breite gedrückt" geworden, so daß sich seine Breite W von der Bezugsbreite unterscheidet, die man ohne den Übersteuerungseffekt erhalten würde.

Die Abweichung der tatsächlichen von der Bezugsbreite führt bei der mittels eines Pulslaufzeitmeßverfahrens durchgeführten Bestimmung der Entfernung eines Objekts, von dem die Empfangspulse 2, 3, 4 stammen, zu einem falschen Entfernungswert.

Der Komparator 9 und ein Logikmodul 11 (vgl. Fig. 3) sind Bestandteile einer Logikeinheit 10, die wiederum einen Bestandteil einer Auswerteeinrichtung 30 des Laserscanners bildet. Das Logikmodul 11 dient dazu, einlaufende, durch Digitalisierung der Empfangspulse 2, 3, 4 erzeugte Pulsbreitensignale zu separieren.

Zur Messung ihrer Breite W werden die digitalisierten Empfangspulse 2', 3', 4' zum Ansteuern eines Differenzverstärkers 12 verwendet, durch dessen beide Zweige ein konstanter Strom gezogen wird. Wird gemäß einer bevorzugten Ausführung ein gleichzeitig mit mehreren Abtastebenen arbeitender Laserscanner verwendet, so ist für jede Abtastebene, d.h. für jeden in einer der Abtastebenen reflektierten und digitalisierten Empfangspuls ein Differenzverstärker vorgesehen.

Solange der jeweilige digitalisierte Empfangspuls 2', 3', 4', d.h. dessen Pulsbreitensignal, am Differenzverstärker 12 ansteht, wird der Zweig desjenigen Transistors umgeschaltet, der einen Entladekondensator 14 mit konstantem Strom entlädt. Am Entladekondensator 14 entsteht eine Spannung, die proportional zur Pulsbreite W des digitalisierten Empfangspulses 2', 3', 4' und somit zur Amplitude des betreffenden analogen Empfangspulses 2, 3, 4 ist.

Mittels eines Analog/Digital-Wandlers 16 wird dieses analoge Spannungssignal digitalisiert und einem nachgeordneten Mikroprozessor 17 zugeführt. Mit der auf diese Weise gemessenen Pulsbreite W des digitalisierten Empfangspulses 2', 3', 4' wird aus einer in einem nichtflüchtigen Speicher (nicht dargestellt) abgelegten, empirisch ermittelten Korrekturkurve 6 (vgl. Fig. 2) ein Entfernungskorrekturwert ermittelt, worauf nachstehend näher eingegangen wird.

Nach jeder Pulsbreitenmessung wird mittels eines Analogschalters 15 der Kondensator 14 wieder entladen. Die Schaltung ist daraufhin bereit für die nächste Pulsbreitenmessung. An die Basis eines zwischen die Transistoren des Differenzverstärkers 12 geschalteten Transistors kann eine Reglerspannung 13 angelegt werden.

Fig. 2 zeigt ein Beispiel für eine Korrekturkurve 6, aus der für jede gemessene Pulsbreite W ein Entfemungskorrekturwert E abgelesen werden kann.

Die Korrekturkurve 6, die auch als Korrekturtabelle bezeichnet werden oder vorliegen kann, ist eine spezifische Eigenschaft des jeweiligen Laserscanners und wird empirisch bestimmt, indem z.B. bei der ersten oder jeder Inbetriebnahme des Scanners automatisch für wenigstens eine konstante Kalibrierentfernung Kalibriermessungen jeweils mit verschiedenen Kalibrieramplituden durchgeführt werden. Dabei wird z.B. mittels einer Mehrzahl von unterschiedliche Reflektivitäten aufweisenden Kalibrierreflektoren der gesamte Dynamikbereich durchfahren.

Die dabei aufgenommene Korrekturkurve oder -tabelle 6 enthält somit für jede in der Praxis auftretende Reflexionsamplitude die Information, um welchen Betrag bei dem betreffenden Laserscanner die gemessene Breite der digitalisierten Empfangspulse 2', 3', 4' von der Bezugsbreite abweicht, d.h. wie groß der Fehler bei der Entfernungsmessung ist.

Auf diese Information wird dann bei der "echten" Messung z.B. während des Fahrbetriebs bei einem an einem Fahrzeug angebrachten Scanner zurückgegriffen, indem aus der Korrekturkurve 6 jeweils für die gemessenen Pulsbreiten W die entsprechenden Entfernungskorrekturwerte E abgelesen und mit diesen die bei der Pulslaufzeitmessung ermittelten Roh-Entfernungswerte korrigiert werden.

Bei der horizontal verlaufenden Gerade in Fig. 2 handelt es sich um einen gerätespezifischen Offset 5 des Laserscanners, d.h. um einen auch bei nicht übersteuerten Empfangspulsen 2, 3 auftretenden, "wahren" Fehler der Entfernungsmessung.

### Bezugszeichenliste

- 1: analoges Empfangssignal
- 2/2': analoger/digitalisierter Empfangspuls (niedrige Amplitude)
- 3/3': analoger/digitalisierter Empfangspuls (hohe Amplitude)
- 4/4': analoger/digitalisierter Empfangspuls (übersteuert)
- 5: Offset
- 6: Korrekturkurve
- 7: Photodiode (APD)
- 8: Verstärker
- 9: Komparator
- 9': Referenzspannung des Komparators
- 10: Logikeinheit
- 11: Logikmodul
- 12: Differenzverstärker
- 13: Reglerspannung
- 14: Entladekondensator
- 15: Analogschalter
- 16: Analog/Digital-Wandler (ADC)
- 17: Mikroprozessor
- 30: Auswerteeinrichtung

- W: Pulsbreite
- E: Entfernungskorrekturwert

## Patentansprüche

1. Optoelektronische Entfernungsmeßeinrichtung, insbesondere Laserscanner, mit
- wenigstens einer Sendeeinheit zur Aussendung gepulster elektromagnetischer Strahlung,
- zumindest einer der Sendeeinheit zugeordneten Empfangseinheit (7, 8) zum Empfang der reflektierten Strahlung und
- einer Auswerteeinrichtung (30) zur Bestimmung der Entfernung von die ausgesandte Strahlung reflektierenden Objekten nach einem Pulslaufzeitmeßverfahren,
wobei die Auswerteeinrichtung (30) derart ausgebildet ist, daß für jeden Sendepuls die Breite (W) eines oder mehrerer Empfangspulse (2, 2', 3, 3', 4, 4') und insbesondere auch die Breite (W) des Sendepulses selbst meßbar ist, und wobei eine Speichereinrichtung vorgesehen ist, in der zumindest eine empirisch gewonnene Korrekturtabelle oder -kurve (6) enthalten ist, die aus für wenigstens eine konstante Kalibrierentfernung jeweils mit verschiedenen Kalibrieramplituden durchgeführten Kalibriermessungen erhalten wurde und der für jede gemessene Pulsbreite (W) ein entsprechender Entfernungskorrekturwert (E) entnehmbar ist.

2. Einrichtung nach Anspruch 1,
**dadurch gekennzeichnet,**
**daß** die Auswerteeinrichtung (30) wenigstens einen Komparator (9) zur Digitalisierung zumindest der analogen und insbesondere verstärkten Empfangspulse (2, 3, 4) umfaßt.

3. Einrichtung nach Anspruch 2,
**dadurch gekennzeichnet,**
**daß** die Auswerteeinrichtung (30) zur Bestimmung der Pulsbreite (W) zumindest der digitalisierten Empfangspulse (2', 3', 4') einen Time-to-Analog-Wandler umfaßt.

4. Einrichtung nach Anspruch 2 oder 3,
**dadurch gekennzeichnet,**
**daß** die Auswerteeinrichtung (30) zur Erzeugung einer zur Pulsbreite (W) zumindest der digitalisierten Empfangspulse (2', 3', 4') proportionalen Spannung ausgebildet ist.

5. Einrichtung nach einem der vorhergehenden Ansprüche,
**dadurch gekennzeichnet,**
**daß** die Auswerteinrichtung (30) einen Analog/Digital-Wandler (16) umfaßt, mit dem aus einem der Pulsbreite (W) zumindest der digitalisierten Empfangspulse (2', 3', 4') entsprechenden analogen Signal ein mit einem nachgeordneten Mikroprozessor (17) verarbeitbares digitales Signale erzeugbar ist.

6. Verfahren zur Entfernungsmessung mit einer optoelektronischen Entfernungsmeßeinrichtung, insbesondere mit einem Laserscanner, die wenigstens eine Sendeeinheit zur Aussendung gepulster elektromagnetischer Strahlung, zumindest eine der Sendeeinheit zugeordnete Empfangseinheit (7, 8) zum Empfang der reflektierten Strahlung und eine Auswerteeinrichtung (30) zur Bestimmung der Entfernung von die ausgesandte Strahlung reflektierenden Objekten nach einem Pulslaufzeitmeßverfahren umfaßt, bei dem
- für jeden Sendepuls die Breite (W) eines oder mehrerer Empfangspulse (2, 2', 3, 3', 4, 4') und insbesondere auch die Breite (W) des Sendepulses selbst gemessen wird,
- einer gespeicherten Korrekturtabelle oder -kurve (6) ein der gemessenen Pulsbreite (W) entsprechender Entfernungskorrekturwert (E) entnommen wird, und
- ein auf der Grundlage des Empfangspulses (2, 2', 3, 3', 4, 4') gemessener Roh-Entfernungswert mittels des Entfernungskorrekturwertes (E) korrigiert wird.

7. Verfahren nach Anspruch 6,
**dadurch gekennzeichnet,**
**daß** die Korrekturtabelle oder - kurve (6) zuvor aus Kalibriermessungen erhalten wird, die für wenigstens eine konstante Kalibrierentfernung jeweils mit verschiedenen Kalibrieramplituden durchgeführt werden.

8. Verfahren nach Anspruch 7,
**dadurch gekennzeichnet,**
**daß** die Kalibrieramplituden mittels verschiedener Kalibrierreflektoren oder mittels verschiedener Abschattungen der Empfangseinheit (7, 8), insbesondere einer Empfangslinse der Empfangseinheit, hervorgerufen werden.

9. Verfahren nach einem der Ansprüche 6 bis 8,
**dadurch gekennzeichnet,**
**daß** die Korrekturtabelle oder -kurve (6) automatisch aufgenommen wird.

10. Verfahren nach einem der Ansprüche 6 bis 9,
**dadurch gekennzeichnet,**
**daß** eine Entfernungsmeßeinrichtung nach einem der Ansprüche 1 bis 5 verwendet wird.
